Europäisches Patentamt

European Patent Office

Office européen des brevets

(19)

(11) Veröffentlichungsnummer : **0 108 873**
**B1**

(12) **EUROPÄISCHE PATENTSCHRIFT**

(45) Veröffentlichungstag der Patentschrift :
25.03.87

(21) Anmeldenummer : 83108451.2

(22) Anmeldetag : 27.08.83

(51) Int. Cl.⁴ : **F 16 H   5/28// G05G19/00**

(54) **Hilfskraftbetätigtes Getriebe.**

(30) Priorität : 15.10.82 DE 3238219

(43) Veröffentlichungstag der Anmeldung :
23.05.84 Patentblatt 84/21

(45) Bekanntmachung des Hinweises auf die Patenterteilung : 25.03.87 Patentblatt 87/13

(84) Benannte Vertragsstaaten :
DE FR GB IT SE

(56) Entgegenhaltungen :
DE-A- 2 742 032
DE-A- 2 755 202
DE-A- 3 108 781
FR-A- 2 005 084
FR-A- 2 211 895

(73) Patentinhaber : WABCO Westinghouse Fahrzeugbremsen GmbH
Am Lindener Hafen 21 Postfach 91 12 80
D-3000 Hannover 91 (DE)

(72) Erfinder : Der Erfinder hat auf seine Nennung verzichtet

(74) Vertreter : Schrödter, Manfred
WABCO Westinghouse Fahrzeugbremsen GmbH Am
Lindener Hafen 21 Postfach 91 12 80
D-3000 Hannover 91 (DE)

## Beschreibung

Die Erfindung bezieht sich auf ein hilfskraftbetätigtes Getriebe gemäß dem Oberbegriff des Patentanspruchs 1.

Bei hilfskraftbetätigten Fahrzeuggetrieben werden die Gänge durch Gangzylinder eingelegt. Die Gangzylinder werden durch ein Druckmittel, also hydraulisch oder pneumatisch, angetrieben. Solche Getriebe werden vor allem bei relativ schweren Nutzfahrzeugen eingesetzt, bei denen die vom Fahrer am Schalthebel aufgebrachte Kraft zum Schalten allein nicht ausreichend wäre.

Es hat sich nun gezeigt, daß bei bestimmten Fahrzuständen, insbesondere in Steigungen, die zum normalen Schalten aufgebrachte Hilfskraft nicht ausreicht, um die Schaltung mit der gewünschten Geschwindigkeit, d. h. möglichst schnell, durchzuführen. Die Folge davon ist, daß das Fahrzeug während einer Schaltung zu schnell an Geschwindigkeit verliert.

Ein ständiger Einsatz einer erhöhten Hilfskraft, z. B. durch einen höheren Druck des Druckmittels oder durch einen größeren Gangzylinder ist jedoch nicht empfehlenswert. Durch die so erzeugte größere Schaltkraft wird nämlich das Getriebe stark belastet und entsprechend schnell abgenutzt.

In der überwiegenden Mehrzahl der normalen Schaltungen auf ebener Straße ist im übrigen eine erhöhte Schaltkraft nicht notwendig.

Hier greift die Erfindung ein. Ihr liegt die Aufgabe zugrunde, ein Getriebe der eingangs genannten Art anzugeben, das in bestimmten, vom Fahrer gewünschten Fällen ein schnelleres Schalten als im Notfall ermöglicht.

Diese Aufgabe wird durch die im Patentanspruch 1 enthaltene Erfindung gelöst. Die Unteransprüche enthalten zweckmäßige Weiterbildungen.

Es ist zwar bereits ein hilfskraftbetätigtes Getriebe bekannt, welches mit unterschiedlichen Hydraulikdrücken arbeitet (DE-A 27 42 032). Im Unterschied zur Erfindung ändert sich jedoch hier die Betätigungskraft während einer Umschaltung. Außerdem ist die Kraft nicht vom Fahrer zu beeinflussen.

Es ist weiter bereits bekannt (DE-A-31 08 781), bei einer hilfskraftbetätigten Getriebesteuerung mit einem 3-Stellungs-Gangzylinder diesen wahlweise mit einem gegenüber dem Vorratsdruck verminderten Druck zu versorgen. Dabei wird der erste Gang mit voller Kraft, die weiteren Gänge aber mit jeweils geringerer Kraft eingelegt. Die Druckreduzierung kann bei Bedarf auch vom Fahrer aufgehoben werden (Schnellschaltung). Die Schnellschaltung ist jedoch nicht für den ersten Gang wirksam. Weiter ist auch nicht angegeben, wie ein vom Fahrer zu betätigender Schalter ausgeführt ist.

In einer Zeichnung ist schematisch ein Ausführungsbeispiel der Erfindung dargestellt.

Ein Getriebe 1 wird durch die Kraft eines Gangzylinders 2 geschaltet. Der Gangzylinder wird durch einen Druckmittelvorrat 4 versorgt. Zur Steuerung des Druckmittels dient eine zwischengeschaltete Ventileinheit 3. Diese wird durch eine elektronische Auswerteschaltung 6 über eine Leitung 14 angesteuert. Die Auswerteschaltung 6 erhält Informationen über den Fahrzustand des Fahrzeugs über eine Leitung 15 sowie weitere Informationen über die Stellung eines als Schalthebel 5 ausgebildeten Schaltbefehlsgebers über Leitungen 16.

Der Schalthebel 5 ist an einer Nockenscheibe 8 auf einem Drehpunkt 18 verdrehbar befestigt. Zum Erkennen des jeweils eingelegten Ganges dienen zwei Mikroschalter 12, 13 die durch einen an der Nockenscheibe 8 befestigten Nocken 19 betätigbar sind. Anstelle von Mikroschaltern können auch berührungslos arbeitende Halbleiterelemente verwendet werden. Der Einfachheit halber ist nur eine Ebene einer gebräuchlichen H-Schaltung dargestellt.

Bei einer Schalthandlung bewegt der Fahrer den Schalthebel 5 zunächst in eine Anwahlposition I. In dieser Position wird einer der Mikroschalter 12, 13 betätigt und anschließend, gesteuert von der Auswerteschaltung 6, der gewünschte Gang eingelegt. Die Nockenscheibe 8 wird in dieser Position durch eine (nicht dargestellte) Sperrvorrichtung so lange gehalten, bis die Gangumschaltung vollzogen ist. Nach vollzogener Gangumschaltung läßt sich der Hebel 5 bis in die Endposition III weiter bewegen. Hieran erkennt der Fahrer, daß die Schaltung ausgeführt ist. Eine solche Gangrückmeldung ist bereits aus der DE-A 30 07 953.9 bekannt.

Falls der Fahrer nun beispielsweise in einer Steigung, eine Schnellschaltung durchführen will, drückt er den Schalthebel 5, ausgehend von der Ganganwahlposition I noch weiter bis in die Schnellschaltposition II. Hierzu muß er die Kraft einer Feder 6, 7 überwinden. Das dem Schalthebel abgewandte Ende der Federn 6, 7 ist mittels Endstücken 10, 11 fest mit der Nockenscheibe 8 verbunden.

Durch das Erreichen der Schnellschalt-Position II hat sich der Schalthebel 5 gegenüber der Nockenscheibe 8 leicht verdreht. Diese Verdrehung wird durch einen auf der Nockenscheibe 8 befestigten Mikroschalter 9 erkannt und über Leitungen 17 an die Auswerteschaltung 6 gemeldet. Die Gewünschte Schnellschaltung wird über die Leitung 14 der Ventileinheit 3 gemeldet.

Zur Erhöhung des Druckes im Gangzylinder 2 ist es möglich, diesem den Druck bei einer Normalschaltung gepulst und bei einer Schnellschaltung ungepulst zuzuführen.

Es ist auch möglich, daß der Druck im Gangzylinder 2 durch die Ventileinheit 3 gedrosselt und bei einer Schnellschaltung ungedrosselt aufgebaut wird.

Weiter ist es möglich, daß die Ventileinheit 3 einen Druckschalter enthält (nicht dargestellt), der bei einer Normalschaltung den Druckaufbau bei einer niedrigeren Druckschwelle als bei einer Schnellschaltung abbricht.

Zweckmäßig ist schließlich auch, bei einer Normalschaltung den Druck nur für eine kurze Zeit einzusteuern. Diese Zeit wird durch ein in der Auswerteschaltung 6 enthaltenes Zeitglied (nicht dargestellt) überwacht. Hierdurch ergibt sich für die Normalschaltung ebenfalls ein verminderter Enddruck.

Ein besonderer Vorteil der Erfindung liegt darin, daß der Fahrer den Befehl zu einer Schnellschaltung nicht über einen separaten Schalter eingeben muß, sondern direkt über den Schalthebel 5. Hierdurch wird die Bedienung der Schaltung stark erleichtert. Die Erfindung ist nicht nur bei H-Schaltungen, sondern auch bei Linear- und Schrittschaltungen anwendbar.

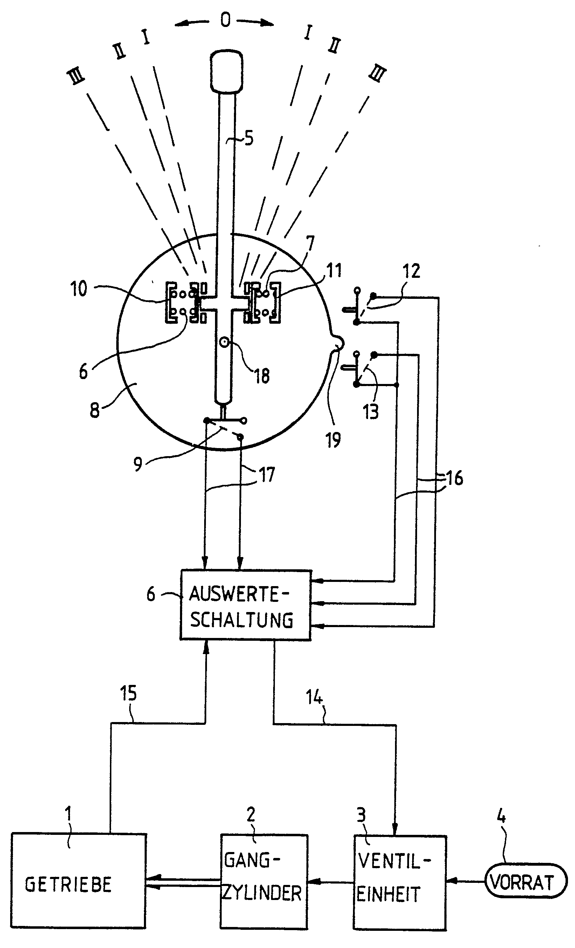

## Patentansprüche

1. Hilfskraftbetätigtes Getriebe (1) mit mindestens einem Gangzylinder (2), der zum Einlegen der Gänge über eine Ventileinheit (3) mit einem Druckmittelvorrat (4) verbindbar ist, einem Schaltbefehlsgeber zum Einlegend er Gänge, dessen Stellung durch eine Auswerteschaltung (6) abtastbar ist, und einer vom Fahrer betätigbaren Schnellschalteinrichtung (6, 7, 9) zum Einlegen der Gänge mit im Vergleich zu einer Normalschaltung erhöhter Hilfskraft, dadurch gekennzeichnet, daß zur Betätigung der Schnellschalteinrichtung (6, 7, 9) der Schaltbefehlsgeber als Schalthebel (5) ausgebildet ist und aus einer Neutralposition (0) zunächst in eine Ganganwahlposition (I) und nach Überwinden einer vorbestimmten Kraft in eine Schnellschaltposition (II) drückbar ist.

2. Hilfskraftbetätigtes Getriebe nach Anspruch 1, dadurch gekennzeichnet, daß die vorbestimmte Kraft durch Federn (6, 7) erzeugt wird.

3. Hilfskraftbetätigtes Getriebe nach Anspruch 1, dadurch gekennzeichnet, daß die Schnellschaltposition (II) mittels eines auf einer Nockenscheibe (8) angebrachten Mikroschalters (9) abfühlbar ist.

4. Hilfskraftbetätigtes Getriebe nach Anspruch 1 und 2, dadurch gekennzeichnet, daß die Schnellschaltposition (II) mittels berührungslos arbeitender Halbleiterelemente abfühlbar ist.

5. Hilfskraftbetätigtes Getriebe nach Anspruch 1 bis 4, dadurch gekennzeichnet, daß der Druck im Gangzylinder (2) durch die Ventileinheit (3) bei einer Normalschaltung gepulst und bei einer Schnellschaltung ungepulst aufgebaut wird.

6. Hilfskraftbetätigtes Getriebe nach Anspruch 1 bis 4, dadurch gekennzeichnet, daß der Druck im Gangzylinder (2) durch die Ventileinheit (3) bei einer Normalschaltung gedrosselt und bei einer Schnellschaltung ungedrosselt aufgebaut wird.

7. Hilfskraftbetätigtes Getriebe nach Anspruch 1 bis 4, dadurch gekennzeichnet, daß die Ventileinheit (3) einen Druckschalter enthält, der bei einer Normalschaltung den Druckaufbau bei einer niedrigeren Druckschwelle als bei einer Schnellschaltung abbricht.

8. Hilfskraftbetätigtes Getriebe nach Anspruch 1 bis 4, dadurch gekennzeichnet, daß die Ventileinheit (3) mittels einer in der Auswerteschaltung (6) enthaltenen Zeitsteuerung derart ansteuerbar ist, daß bei einer Normalschaltung nur für eine begrenzte Zeit Druck eingesteuert wird.

## Claims

1. Transmission (1) with power-assisted control, having at least one operating cylinder (2) which, for engaging the gears, can be connected via a valve unit (3) to a pressure-medium supply (4), a gear-change command transmitter for engaging the gears, the position of which transmitter can be scanned by an evaluation circuit (6), and a rapid gear change device (6, 7, 9) that can be operated by the driver for engaging the gears with increased power assistance compared with a normal gear change, characterised in that, for operating the rapid gear change device (6, 7, 9), the gear-change command transmitter is in the form of a gear-change lever (5) and can be pushed from a neutral position (0) firstly into a gear selection position (I) and, after overcoming a predetermined force, into a rapid gear change position (II).

2. Transmission with power-assisted control according to claim 1, characterised in that the predetermined force is produced by springs (6, 7).

3. Transmission with power-assisted control according to claim 1, characterised in that the rapid gear change position (II) is sensed by means of a microswitch (9) attached to a cam plate (8).

4. Transmission with power-assisted control according to claims 1 and 2, characterised in that the rapid gear change position (II) is sensed by semiconductor means that operate without making contact.

5. Transmission with power-assisted control according to claims 1 to 4, characterised in that the pressure in the operating cylinder (2) is built up by the valve unit (3) in pulses in the case of a normal gear change and in an unpulsed manner in the case of a rapid gear change.

6. Transmission with power-assisted control according to claims 1 to 4, characterised in that the pressure in the operating cylinder (2) is built up by the valve unit (3) in a throttled manner in the case of a normal gear change and in an unthrottled manner in the case of a rapid gear change.

7. Transmission with power-assisted control according to claims 1 to 4, characterised in that the valve unit (3) contains a pressure switch taht stops the build-up of pressure at a lower pressure threshold in the case of a normal gear change than in the case of a rapid gear change.

8. Transmission with power-assisted control according to claims 1 to 4, characterised in that the valve unit (3) can be controlled by a time control device contained in the evaluation circuit (6) in such a manner that, in the case of a normal gear change, pressure is fed in for only a limited period of time.

**Revendications**

1. Boîte de vitesses ou transmission (1) commandée par force auxiliaire et comportant au moins un vérin de passage de vitesse (2) qui, pour passer les vitesses, peut être relié à travers une unité de distribution (3) à un réservoir (4) de fluide de pression, un générateur d'ordres d'engagement des vitesses, dont la position peut être détectée par un circuit d'évaluation (6), ainsi qu'un dispositif de changement rapide (6, 7, 9), pouvant être actionné par le conducteur, pour passer les vitesses avec une force auxiliaire accrue par rapport à un changement de vitesse normal, caractérisée en ce que, pour l'actionnement du dispositif de changement de vitesse rapide (6, 7, 9), le générateur d'ordres de changement est réalisé comme un levier de changement de vitesse (5) qui, à partir d'une position de point mort (0), peut être amené d'abord à une position de sélection de vitesse (I) et, après qu'une force prédéterminée a été vaincue, à une position de changement de vitesse rapide (II).

2. Boîte selon la revendication 1, caractérisée en ce que la force prédéterminée est produite par des ressorts (6, 7).

3. Boîte selon la revendication 1, caractérisée en ce que la position de changement rapide (II) peut être détectée au moyen d'un microrupteur (9) disposé sur une came (8).

4. Boîte selon les revendications 1 et 2, caractérisée en ce que la position de changement rapide (II) peut être détectée au moyen d'éléments semiconducteurs travaillant sans contact.

5. Boîte selon les revendications 1 à 4, caractérisée en ce que l'unité de distribution (3) délivre une pression pulsatoire au vérin de passage de vitesse (2) dans le cas d'un changement de vitesse normal, et une pression non pulsatoire dans le cas d'un changement de vitesse rapide.

6. Boîte selon les revendications 1 à 4, caractérisée en ce que l'unité de distribution (3) étrangle l'établissement de la pression dans le vérin de passage de vitesse (2) dans le cas d'un changement de vitesse normal, et qu'elle permet un établissement de pression sans étranglement dans le cas d'un changement de vitesse rapide.

7. Boîte selon les revendications 1 à 4, caractérisée en ce que l'unité de distribution (3) contient un manocontacteur qui, dans le cas d'un changement de vitesse normal, interrompt l'établissement de la pression à un seuil de pression plus bas que dans le cas d'un changement de vitesse rapide.

8. Boîte selon les revendications 1 à 4, caractérisée en ce que l'unité de distribution (3) peut être pilotée, au moyen d'un élément à retard contenu dans le circuit d'évaluation (6), de manière que, dans le cas d'un changement de vitesse normal, la pression soit seulement envoyée pendant une durée limitée au vérin de passage de vitesse.